# EUROPÄISCHE PATENTANMELDUNG

(11) **EP 1 103 408 A2**
(43) Veröffentlichungstag der Anmeldung: **30.05.2001**
(21) Anmeldenummer: 00115893.0
(22) Anmeldetag: 25.07.2000
(51) Int. Cl.: B60K 41/02, F16H 61/14

(54) **Steuereinrichtung für eine direkteinspritzende Brennkraftmaschine und Fahrzeug dafür**

(30) Priorität: 27.11.1999 DE 19957182
(71) Anmelder: ROBERT BOSCH GMBH, 70442 Stuttgart (DE)
(72) Erfinder: Bauer, Hartmut, 70839 Gerlingen (DE); Bolz, Martin-Peter, 77815 Buehl (DE); Huelser, Holger, Dr., 70329 Stuttgart (DE)

(57) **Zusammenfassung**

Brennkraftmaschinen, insbesondere Verbrennungsmotoren für Automobile, die mit einer Kraftstoff-Direkteinspritzung ausgestattet sind, können sowohl im homogenen Bereich mit einem Luft-Kraftstoff-Verhältnis von λ = 1 als auch im sog. Schichtladungs-Betrieb mit λ > 1 betrieben werden. Im homogenen Betrieb (λ = 1) werden hohe Drehmomente erzielt, im Schichtladungs-Betrieb (λ > 1) wird ein geringer Kraftstoffverbrauch erreicht. Übliche Betriebsweisen solcher Verbrennungsmotoren sehen einen abwechselnden Betrieb in beiden Modi vor. Ein Problem beim Umschalten zwischen den Modi liegt darin, dass oftmals Unstetigkeiten im Drehmomentenverlauf entstehen, die zu einem störenden Ruck des Fahrzeuges führen.

Um ein sanftes Umschalten zu erzielen, wird eine erfindungsgemäße Steuereinrichtung (KST) vorgeschlagen, die mit einem ersten Steuerteil (MST) verbunden ist, das abhängig von wenigstens einer Betriebsgröße zwischen einem Betriebsmodus der Kraftstoffeinspritzung im Schicht- oder Homogenbetrieb umschaltet, und die mit einem zweiten Steuerteil (WST) für eine im Antriebsstrang angeordnete Kupplung (WK) verbunden ist, und die über dieses zweite Steuerteil (WST) den Schlupf in der Kupplung um einen vorgebbaren Wert erhöht, bevor sie über das erste Steuerteil (MST) den Betriebsmodus der Kraftstoffeinspritzung umschaltet. Demnach wird kurz vor dem Umschalten die geeignete Kupplung (WK) leicht geöffnet, was die herkömmlichen, nachteiligen Eingriffe in die Drosselklappensteuerung oder in die Zündwinkelsteuerung erspart und somit das Absenken des Wirkungsgrads des Gesamtsystems und das Auftreten von Momentenschwankungen im Antriebsstrang weitgehend vermeidet.

## Beschreibung

### Stand der Technik

Die Erfindung betrifft eine Steuereinrichtung für eine direkteinspritzende Brennkraftmaschine nach dem Oberbegrif des Anspruchs 1 und ein damit ausgestattetes Fahrzeug nach dem Oberbegriff des nebengeordneten Anspruchs 8.

Brennkraftmaschinen, insbesondere Verbrennungsmotoren für Automobile, die mit einer Kraftstoff-Direkteinspritzung ausgestattet sind, können sowohl im homogenen Bereich mit einem Luft-Kraftstoff-Verhältnis von λ = 1 als auch im sog Schichtladungs-Betrieb mit λ > 1 betrieben werden. Im homogenen Betrieb (λ = 1) werden hohe Drehmomente erzielt, im Schichtladungs-Betrieb (λ > 1) wird ein geringer Kraftstoffverbrauch erreicht. Übliche Betriebsweisen solcher Verbrennungsmotoren sehen einen abwechselnden Betrieb in beiden Modi vor. Ein Problem beim Umschalten zwischen den Modi liegt darin, dass oftmals Unstetigkeiten im Drehmomentenverlauf entstehen, die zu einem störenden Ruck des Fahrzeuges führen.

Um diesem Problem entgegenzutreten, wird in DE 196 31 986 A1 eine Steuereinrichtung für eine direkteinspritzende Brennkraftmaschine beschrieben, bei der die Steuerung für die Brennkraftmaschine abhängig von wenigstens einer Betriebsgröße, z.B. von dem geforderten Solldrehmoment, zwischen einem Betriebsmodus der Kraftstoffeinspritzung im Schicht- oder Homogenbetrieb umschaltet. Um zu vermeiden, dass beim Umschalten zu hohe Drehmomentensprünge auftreten, wird in DE 196 31 986 A1 ein Stellelement zur Einstellung der Luftzufuhr, insbesondere eine Drosselklappe, sprungförmig verstellt, so dass das Drehmoment vor und nach dem Umschalten im wesentlichen gleich ist. Aufgrund des benötigten Stellelementes ist diese bekannte Steuereinrichtung relativ aufwendig aufgebaut.

Aus DE 43 32 171 A1 ist eine Steuereinrichtung bekannt, die lediglich die Kraftstoffeinspritzung und die Umschaltung zwischen dem Schichtbetrieb und Homogenbetrieb steuert. Eine Kompensation des dabei auftretenden Drehmomentensprungs wird dort nicht beschrieben.

Aufgabe der Erfindung ist es, eine Steuereinrichtung der eingangs genannten Art zu schaffen, die einfach aufgebaut ist und die eine ausreichende Kompensation des Drehmomentensprunges erreicht. Außerdem soll ein Fahrzeug mit einer direkteinspritzenden Brennkraftmaschine vorgeschlagen werden, das mit einer solchen Steuereinrichtung ausgestattet ist.

Gelöst wird die Aufgabe durch eine Steuereinrichtung mit den Merkmalen nach Anspruch 1 sowie durch ein damit ausgestattetes Fahrzeug mit den Merkmalen nach Anspruch 8.

Demnach wird vorgeschlagen, dass die Steuereinrichtung nicht nur mit einem ersten Steuerteil für eine direkteinspritzende Brennkraftmaschine versehen wird, das abhängig von wenigstens einer Betriebsgröße zwischen einem Betriebsmodus der Kraftstoffeinspritzung im Schicht- oder Homogenbetrieb umschaltet, sondern auch mit einem zweiten Steuerteil für eine im Antriebsstrang angeordnete Kupplung versehen wird, so dass die Steuereinrichtung über das zweite Steuerteil den Schlupf in der Kupplung um einen vorgebbaren Wert erhöht, bevor die Steuereinrichtung über das erste Steuerteil den Betriebsmodus der Kraftstoffeinspritzung umschaltet.

Durch diese erfindungsgemäßen Maßnahmen wird eine koordinierte Ansteuerung von Brennkraftmaschine und Kupplung geschaffen, die bei Umschaltung zwischen Schichtladungsbetrieb und homogenen Betrieb ein leichtes Öffnen der Kupplung bewirkt, wodurch die auftretende Unstetigkeit im Drehmoment gedämpft wird. Da der auftretende Momentenüberschuß nicht an die Antriebsräder des Fahrzeuges weitergegeben wird, sondern in Form von Rotationsenergie in der Brennkraftmaschine gespeichert wird, entsteht auch kein Ruck, der den Fahrkomfort beeinträchtigen könnte. Die Erfndung greift auf die bereits vorhandenen Glieder des Antriebsstranges, wie Brennkraftmaschine und Kupplung, zurück. Lediglich für den Aufbau der erfindungsgemäßen Steuereinrichtung werden zusätzliche Bauteile, die zumeist aus steuerelektronischen Bauelementen bestehen, benötigt. Dadurch ist eine schnelle und kostengünstige Realisierung der Erfindung gegeben.

Besonders vorteilhafte Ausgestaltungen der Erfindung ergeben sich aus den Unteransprüchen.

Demnach ist es für den Fall, dass die Steuereinrichtung in ein Fahrzeug mit Drehmomentenwandler eingesetzt wird, besonders vorteilhaft, wenn die im Antriebsstrang angeordnete Kupplung eine im Wandler integrierte Überbrückungskupplung ist. Die Steuereinrichtung wirkt gezielt auf die Überbrückungskupplung ein, wodurch der bereits vorhandene Drehmomentenwandler zum Auffangen des Momentenüberschusses genutzt werden kann.

Für ein Fahrzeug mit elektronischem Kupplungs-Management, insbesondere mit automatisiertem Schaltgetriebe, ist es ebenso von Vorteil, wenn die im Antriebsstrang angeordnete Kupplung die dort bereits vorhandene Servo-Kupplung ist. Gleichfalls ist es für ein Fahrzeug mit Automatikgetriebe vorteilhaft, wenn die im Antriebsstrang angeordnete Kupplung eine der am Kraftfluß beteiligten Kupplungen ist.

Ein besonderer Vorteil ergibt sich dann, wenn die Steuereinrichtung über das zweite Steuerteil den Schlupf in der Kupplung um einen vorgebbaren Wert erhöht, der einer Drehzahldifferenz von maximal 100 U/min entspricht. Dieser Wert wiederum entspricht einem Momentenüberschuß, der ohne merklichen Ruck, von dem Antriebsstrang aufgefangen werden kann.

Weiterhin ergibt sich ein besonderer Vorteil dann, wenn die Steuereinrichtung ein drittes Steuerteil umfasst, welches das Getriebe des Fahrzeugs steuert, und wenn die Steuereinrichtung aus einer von dem ersten Steuerteil gemeldeten Motordrehzahl und einer von dem dritten Steuerteil gemeldeten Getriebdrehzahl eine Drehzahldifferenz ermittelt und diese an den vorgegebenen Wert durch Steuerbefehle an das erste Steuerteil und/oder zweite Steuerteil anpasst. In diesem Zusammenhang ist es besonders vorteilhaft, wenn die Steuereinrichtung in eine zentrale Steuerung für den Antriebsstrang des Fahrzeuges integriert ist.

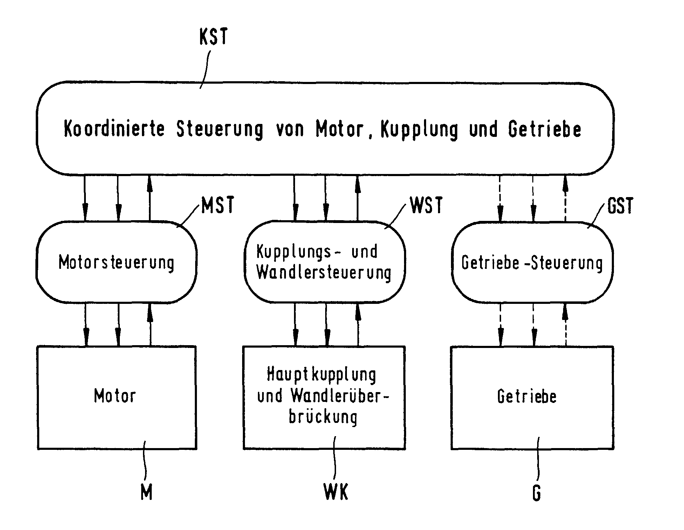

Die Erfindung und die sich daraus ergebenden Vorteile werden nun anhand eines Ausführungsbeispiels und unter Zuhilfenahme der beigefügten Figur näher beschrieben.

Die einzige Figur zeigt das Blockschaltbild einer erfindungsgemäßen Steuereinrichtung KST, die ein erstes Steuerteil MST, ein zweites Steuerteil WST und außerdem ein drittes Steuerteil GST umfasst. Das erste Steuerteil MST ist mit einer Brennkraftmaschine M mit Direkteinspritzung verbunden und steuert die Kratfstoffeinspritzung. In diesen Beispiel handelt es sich um einen Benzin-Verbrennungsmotor M für einen Personenkraftwagen, dessen Antriebsstrang mit einem hydrodynamischen Wandler ausgestattet ist. Dessen Wandlerüberbrückungskupplung WK wird von dem zweiten Steuerteil WST gesteuert. Das dritte Steuerteil GST, welches ebenfalls mit der Steuereinrichtung KST verbunden ist, steuert und überwacht das Schaltgetriebe G. Die Verbindung zwischen der Steuereinrichtung KST und dem dritten Steuerteil GST ist nicht notwendig, um die Erfindung auszuführen. Jedoch ist es vorteilhaft, wenn die Steuereinrichtung KST sowohl den Motor M und die Kupplung WK als auch das Schaltgetriebe G zentral steuert. Deshalb ist die Steuereinrichtung in eine zentrale Steuerung KST für den Antriebsstrang des Fahrzeuges integriert, die über ein vereinfacht dargestelltes Adress-und Datenbussystem mit den verschiedenen zu steuernden Komponenten, wie etwa der Motorsteuerung MST, der Wandlersteuerung WST und der Getriebesteuerung GST verbunden ist. Dadurch wird eine sehr hohe Bauteiledichte und große Kompaktheit erreicht. Die Steuereinrichtung wird im folgenden entsprechend ihrer noch nachfolgend näher beschriebenen Funktionen auch als koordinierte Steuerung KST bezeichnet.

Um nun einen sanften Wechsel zwischen dem homogenen Betrieb (λ =1) des Motors M und dem sog. Schichtladungs-Betrieb (λ > 1) zu erzielen, arbeitet die koordinierte Steuerung KST erfindungsgemäß wie folgt:

Die koordinierte Steuerung KST stellt vor jedem Umschaltauftrag der Motorsteuerung MST sicher, dass die Wandlersteuerung WST die Überbrückungskupplung WK so ansteuert, dass genau das in der momentanen Fahrsituation benötigte Drehmoment über die Kupplung übertragen wird.

Zusätzlich wird die Wandlersteuerung WST angewiesen, über der Überbrückungskupplung WK eine geringe vorgebbare Drehzahldifferenz von etwa 100 U/min. einzustellen, d.h. einen kleinen definierten Schlupf zu erzwingen. Danach bekommt die Motorsteuerung MST von der koordinierten Steuerung KST die Freigabe zur Umschaltung, die einen beachtlichen Momentenüberschuß bewirkt. Aufgrund des bewußt eingestellten Schlupfes führt das zusätzliche Drehmoment zu einer Beschleunigung des Motors, d.h. die überschüssige Energie bleibt im wesentlichen als zusätzliche Rotationsenergie im Motor gespeichert. Die für die Fahrzeugbewegung benötigte Energie wird nach wie vor über den Antriebsstrang übertragen. Dadurch wird vermieden, dass während der Umschaltung ein Bewegungsruck auftritt, der die Fahrzeuginsassen stören könnte. Die koordinierte Steuerung KST reduziert dann das vom Motor M abgegebene Moment, so dass die Motordrehzehl sinkt und sich der Getriebedrehzahl anpaßt. Der definiert eingestellte, erzwungene Schlupf in der Überbrückungskupplung WK wird zurückgenommen. Dabei wird die zuvor im Motor M gespeicherte zusätzliche Rotationsenergie zum überwiegenden Teil als Antriebsenergie zurückgewonnen. Lediglich ein verbleibender Rest der Rotationsenergie geht bei der Umschaltung verloren durch Erwärmung der Kupplung. Jedoch wird dadurch, dass die Momentenüberhöhung nur für eine kurze Zeit auftritt, eine große Anhebung der Motordrehzahl verhindert. Aus Gründen des Fahrkomforts ist die Steuerung so eingestellt, dass die Motordrehzahl nicht mehr als 100 U/min. variiert.

Das hier beschriebene Ausführungsbeispiel bezieht sich auf die Ansteuerung von einem Antriebstsrang mit Wandlerüberbrückungskupplung. Die Erfindung ist jedoch nicht hierauf beschränkt, sondern ist in allen Antriebssträngen einsetzbar, die einen beinflußbares Glied mit variablem Schlupf aufweisen. Hier sind besonders Servo-Kupplungen oder auch Stufenautomatikgetriebe zu nennen. Im ersten Fall ist die Erfindung besonders gut in ein vorhandenes elektronisches Kupplungs-Management, dem sogenannten EKM, integrierbar. Das EKM an sich ist bekannt und es wird im zunehmenden Maße eingesetzt, um den Fahrkomfort zu erhöhen. Bein EKM schaltet der Fahrer wie gewohnt, ohne selbst kupplen zu müssen. Die Betätigung der Kupplung wird elektromotorisch ausgeführt. In diesem Fall ist eine Verknüpfung mit dem automatisierten Schaltgetriebe, dem an sich bekannten ASG, angezeigt. Das bedeutet, dass die erfindungsgemäße Steuereinrichtung dann auch die Getriebesteuerung beeinflußt. Dasselbe glit für den Fall eines Stufenautomatikgetriebes.

Die hier vorgeschlagene, sanfte Umschaltung, bei der kurz vor dem Umschalten die geeignete Kupplung leicht geöffnet wird, erspart die herkömmlichen und nachteiligen Eingriffe in die Drosselklappensteuerung oder in die Zündwinkelsteuerung, die den Wirkungsgrad des Gesamtsystems senken und möglicherweise Momentenschwankungen im Antriebsstrang verursachen. Hingegen sind bei der erfindungsgemäßen Umschaltung Momentenschwankungen nahezu auszuschließen und es wird ein großer Teil der bei der Umschaltung entstehenden überschüssigen Rotationsenergie wieder zurückgewonnen. Wie es das oben beschriebene Ausführungsbeispiel verdeutlicht, ermöglicht die Erfindung ein sehr effektives und sanftes Umschalten zwischen den beiden Betriebsmodi "homogener Betrieb" und "Schichtladungs-Betrieb", ohne dass sehr viele neu und kompliziert aufgebaute Bauteile benötigt werden. Deshalb ist die Erfindung mit nur geringen Zusatzkosten realisierbar.

## Patentansprüche

1. Steuereinrichtung (KST) mit einem ersten Steuerteil (MST) für eine direkteinspritzende Brennkraftmaschine (M), das abhängig von wenigstens einer Betriebsgröße zwischen einem Betriebsmodus der Kraftstoffeinspritzung im Schicht-oder Homogenbetrieb umschaltet, und mit einem zweiten Steuerteil (WST) für eine im Antriebsstrang angeordnete Kupplung (WK), **dadurch gekennzeichnet,** dass die Steuereinrichtung über das zweite Steuerteil (WST) den Schlupf in der Kupplung um einen vorgebbaren Wert erhöht, bevor die Steuereinrichtung über das erste Steuerteil (MST) den Betriebsmodus der Kraftstoffeinspritzung umschaltet.

2. Steuereinrichtung (KST) nach Anspruch 1 für ein Fahrzeug mit Drehmomentenwandler, dadurch gekennzeichnet, dass die im Antriebsstrang angeordnete Kupplung eine im Wandler integrierte Überbrückungskupplung (WK) ist.

3. Steuereinrichtung nach Anspruch 1 für ein Fahrzeug mit elektronischem Kupplungs-Management, insbesondere mit automatisiertem Schaltgetriebe, dadurch gekennzeichnet, dass die im Antriebsstrang angeordnete Kupplung eine Servo-Kupplung ist.

4. Steuereinrichtung nach Anspruch 1 für ein Fahrzeug mit Automatikgetriebe, dadurch gekennzeichnet, dass die im Antriebsstrang angeordnete Kupplung eine der am Kraftfluß beteiligten Kupplungen ist.

5. Steuereinrichtung (KST) nach einem der vorhergehenden Ansprüche, dadurch gekennzeichnet, dass die Steuereinrichtung (KST) über das zweite Steuerteil (WST) den Schlupf in der Kupplung (WK) um einen vorgebbaren Wert erhöht, der einer Drehzahldifferenz von maximal 100 U/min entspricht.

6. Steuereinrichtung (KST) nach einem der vorhergehenden Ansprüche, dadurch gekennzeichnet, dass die Steuereinrichtung (KST) ein drittes Steuerteil (GST) umfasst, das das Fahrzeuggetriebe (G) steuert, dass die Steuereinrichtung (KST) aus einer von dem ersten Steuerteil (MST) gemeldeten Motordrehzahl und einer von dem dritten Steuerteil (GST) gemeldeten Getriebedrehzahl eine Drehzahldifferenz ermittelt und diese an den vorgegebenen Wert durch Steuerbefehle an das erste Steuerteil (MST) und/oder das zweite Steuerteil (WST) anpasst.

7. Steuereinrichtung (KST) nach einem der vorhergehenden Ansprüche, dadurch gekennzeichnet, dass die Steuereinrichtung in eine zentrale Steuerung (KST) für den Antriebsstrang des Fahrzeuges integriert ist.

8. Fahrzeug mit einer direkteinspritzenden Brennkraftmaschine (M) und mit einer Steuereinrichtung (KST), die ein erstes Steuerteil (MST) für die direkteinspritzende Brennkraftmaschine (M) umfasst, das abhängig von wenigstens einer Betriebsgröße zwischen einem Betriebsmodus der Kraftstoffeinspritzung im Schicht- oder Homogenbetrieb umschaltet, und die ein zweites Steuerteil (WST) für eine im Antriebsstrang angeordnete Kupplung (WK) umfasst, dadurch gekennzeichnet, dass die Steuereinrichtung (KST) über das zweite Steuerteil (WST) den Schlupf in der Kupplung (WK) um einen vorgebbaren Wert erhöht, bevor die Steuereinrichtung (KST) über das erste Steuerteil (MST) den Betriebsmodus der Kraftstoffeinspritzung umschaltet.
